# EUROPEAN PATENT APPLICATION

(11) **EP 1 964 748 A1**
(43) Date of publication of application: **03.09.2008**
(21) Application number: 08100498.8
(22) Date of filing: 15.01.2008
(51) Int. Cl.: B61D 7/32, B60P 1/36

(54) **Transformable trailer**

(30) Priority: 16.01.2007 NL 2000438
(71) Applicant: Internationaal Transportbedrijf Butter B.V.,, 8251 JT Dronten (NL)
(72) Inventor: KLEIN WOOLTHUIS, Harmen, 3741 LM, BAARN (NL)
(74) Representative: Kupecz, Arpad

(57) **Abstract**

The invention relates to a trailer (1) or the like, comprising at least a bottom surface (3) and side walls (2,2'), wherein the same further comprises floor elements (4,4') and second side wall elements (5), wherein in a first position the bottom surface (3) is covered by the floor elements (4,4') and the second side wall elements (5); and in a second position the bottom surface (3) is partly covered by the floor elements (4,4') and the side walls (2,2') are at least partly covered by the respective second side wall elements (5). The invention also relates to a lorry comprising a trailer according to the invention.

## Description

The present invention relates to a trailer for lorries, comprising at least a bottom surface and side walls. The invention also relates to a method of unloading a lorry and to a lorry.

In practice, trailers designed as floor unloaders are widely known. Floor unloaders comprise a floor on a bottom surface, walls and possibly a roof. The floor consists of two slanting floor elements, of which one longitudinal side is connected with the respective walls and the other longitudinal side is at a lower position placed near a conveyor belt. Due to the slant of the floor elements, bulk goods contained in such a floor unloader will be guided towards the conveyor belt and a suitable movement of the conveyor belt will cause them to be removed from the floor unloader.

An example of goods to be transported by a floor unloader are potatoes. These are transported from the place of harvest or possibly from an interim storage to, for example, a factory where they are made into, for example, chips.

Subsequently the floor unloader returns to the place of harvest or possibly to the interim storage in order to take the following load to the factory.

By means of refrigerator vans the chips or other potato products produced in the factory, are taken to a destination. In many cases these refrigerator vans will then return empty to the factory in order to take a following load to a destination.

The manner of transport currently used means that at least two vehicles are needed for the transport of the unprocessed products, in this case potatoes, and the processed products, in this case the potato products. This means that 50% of the distance covered by the lorries involves empty vehicles.

The object of the invention is to provide improved transport means.

A particular object of the invention is to provide an improved trailer or loading body for a trailer or the like.

An object of the invention is in particular to provide an improved trailer with which the above-mentioned drawbacks can at least partly be removed.

In order to provide an improved trailer of the kind mentioned in the preamble, the same possesses the feature mentioned in the characterizing part of claim 1.

The method according to the invention comprises the measures featured in claim 16.

An improved lorry possesses the feature mentioned in claim 17.

The advantage of the trailer according to the invention is that when its components are in a first position, it may serve as ordinary trailer, in particular as refrigerator van, and in a second position it may serve as floor unloader. This provides the advantage that in the first position it may serve as refrigerator van for the transport of products that need to be refrigerated, and in the second position it may serve as floor unloader for the transport of bulk goods to a factory. This provides a particular advantage for the transport of bulk goods that after delivery at the factory may be processed into refrigerated or frozen products, and which can thus in that form be transported to a destination by the same trailer. The effectual driving distance of the trailer is in this way considerably increased. With the present invention it is very well possible to increase the effectual driving distance to at least 80%.

Other advantages and features of the invention will become apparent from the following description and from the drawing.

Although reference is made here to a trailer, the invention is not limited thereto. Other embodiments that can be transported by a lorry and that may comprise the features of the invention fall within the protective scope. The invention may, for example, be implemented in a container.

It is in particular preferred for the first walls in the second position to be substantially completely covered by the respective second wall elements. This will prevent the first walls of the trailer becoming soiled by the bulk goods to be transported in the trailer.

It is further preferred for the trailer to form in the second position a floor unloader, wherein a floor part that in the second position is not covered by the floor elements, comprises a conveyor means. It is particularly preferred for this conveyor means to be a conveyor belt of the kind commonly used for floor unloaders.

In addition, it is preferred for the trailer to comprise a ceiling (also referred to as roof), with the second wall elements in the second position substantially extending to the ceiling. It is in particular preferred for the ceiling to be at least partly removable or movable allowing the trailer in the second position to be conveniently filled with bulk goods.

A suitable embodiment of the trailer according to the invention is obtained when a first longitudinal side of the second wall elements is hingingly connected with a first longitudinal side of the respective floor elements. In that case, the second wall elements in the first position can be placed on the floor elements and can in the second position, by means of a simple hinge movement along the respective first longitudinal side, be swung upward until they rest against the first walls.

In the first position it is also preferred for a second longitudinal side of one of the two wall elements to rest substantially against a second longitudinal side of the other of the second wall elements. This makes it possible to substantially completely cover the bottom surface in the first position.

In addition, it is preferred for the first side walls to be thermally insulated. Refrigerated or frozen products to be transported with the trailer can then be transported in an energy-saving manner. It is moreover also preferred for a floor, formed by the bottom surface and/or the floor elements, to be thermally insulated like the ceiling.

In order to allow the trailer in the second position to be conveniently used as floor unloader, it is in the second position preferred for a longitudinal side of the floor elements positioned along the side wall to be positioned at a distance above the bottom surface, and for the longitudinal side facing away therefrom to be positioned substantially at the level of the bottom surface. Gravitational force will then automatically guide the bulk goods in the trailer towards the middle of the trailer, where they will come to rest on the conveyor means.

In general it is preferred for the second wall elements in the first position to rest on the floor elements, and for the second wall elements in the second position to rest against the first wall elements. This, in combination with the hinging connection between the floor elements and the second wall elements automatically causes the side of the second wall elements that are in the first position to be located at the inside of the trailer, while they will in the second position rest against the first walls of the trailer. In this way the side of the second wall elements that may possibly be soiled by the bulk goods, will in the first position automatically face away from the interior of the trailer. It is therefore not necessary to clean the trailer properly if after the transport of bulk goods other products have to be transported with the same trailer.

According to a further embodiment it is preferred for the trailer to comprise covering means, which in a first position are at least partly situated above the conveyor means, while in a second position leaving the conveyor means at least substantially exposed. This will prevent products in the trailer from directly pressing on the conveyor means, so as to avoid it becoming damaged.

It is in particular preferred for the cover means to be slidable between the first and the second position. For example, both sides of the conveyor means may be provided with such cover means, each substantially covering half of the width of the conveyor means, for example a conveyor belt. Viewed in the longitudinal direction, several sets (of two cover means each at both sides of the conveyor means) of cover means may be provided, for example, two sets positioned in succession. It is also possible to provide more than two sets, for example three or four sets, or even five or still more sets.

According to a further preferred embodiment, the conveyor means comprises an elevated portion in the longitudinal direction, for the support of cover means covering the conveyor means.

In accordance with a further aspect, the invention relates to a method for unloading a trailer according to the invention, wherein the trailer in the longitudinal direction comprises at least two cover means, respectively covering a rear part and an adjoining relatively forward part of the conveyor means, whereby in a first step the rear cover means is moved from the first position to the second position, and the conveyor means is started in order to remove products from the rear part of the trailer, and in a second step, when at least a quantity of the products at the rear part has been removed from the trailer, the front cover means is moved to the second position in order to remove products from the forward part of the trailer.

Hereinafter the invention will be described further with reference to the figures.

Fig. 1 shows a cross-sectional schematic view in perspective of a trailer according to the invention with the floor elements and the two side wall elements in the first position.

Fig. 2 shows a trailer according to Fig. 1 in the second position.

Fig. 3 shows a further embodiment of the invention.

The figures below are merely intended as example of a possible embodiment of the invention. The embodiment shown in the figures must not be understood as limiting the protective scope of this invention.

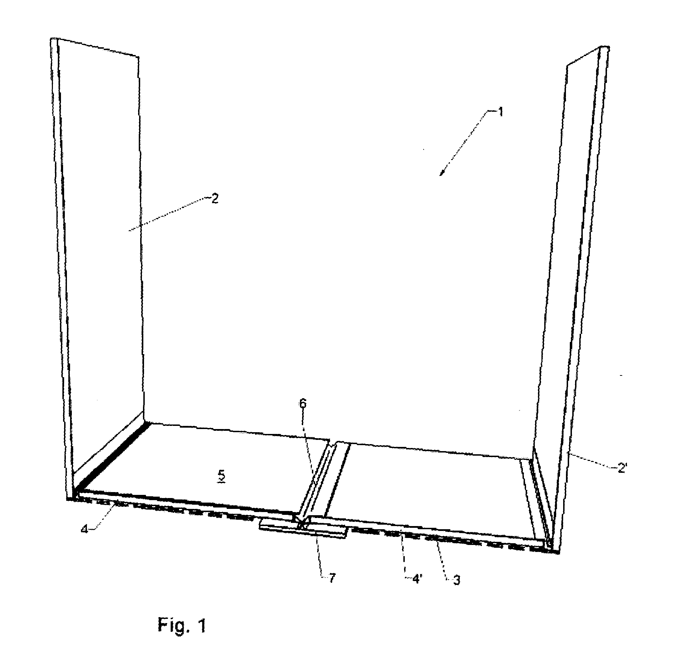

Fig. 1 illustrates a trailer 1 showing only the interior, comprising first walls 2, 2' and a bottom surface 3, schematically indicated with a broken line. As shown in the embodiment of Fig. 1, the bottom surface 3 is covered by floor elements 4, 4'. In this embodiment, the floor element 4 is covered by a second wall element 5. The other second wall element, which is able to cover the floor element 4', is not shown in this embodiment. The first longitudinal side 6 of the second wall element 5 reaches to halfway between the two first walls 2, 2'. Another second wall element (not shown) will then reach to the first longitudinal side 6 of the second wall element 5.

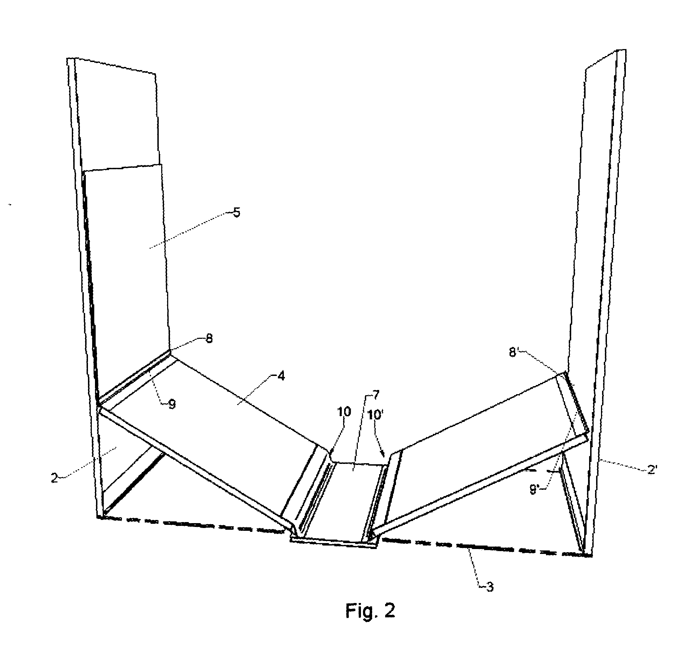

Approximately at the level of the bottom surface 3, in the middle of the trailer 1, a conveyor means 7 is provided. The significance of this conveyor means 7 will become apparent from the description of Fig. 2.

Fig. 2 shows the trailer 1 according to Fig. 1 in a second position. The first walls 2, 2' of the trailer 1 as well as the conveyor means 7 are positioned in the same way as those of the embodiment shown in Fig. 1. The floor elements 4, 4', however, have each been moved with their second longitudinal side 8, 8' upward along the respective first walls 2, 2'. The second wall element 5, whose longitudinal side is hingingly fastened to the longitudinal side 8 of the floor element 4, is swung upwards, so that this second wall element 5 is resting against the first wall 2. Moving the sides of the floor elements 4, 4' that are resting against the first walls 2, 2' upward causes the ends 9, 9' of the respective floor elements 4, 4' to slide upward, and the ends 10, 10' to slide in the direction of the side walls 2, 2' respectively, such that the conveyor means 7 has at least partly become exposed. As a result, bulk goods that may be in the trailer 1 will be discharged from the trailer 1 in the known manner by means of the conveyor means 7 so that, due to gravitational force, any goods on the slanting floor elements 4, 4' are moved downwards.

The advantage gained according to the invention is that when transporting bulk goods in the trailer while the same is in the position shown in Fig. 2, only the surfaces that are exposed then are liable to becoming soiled by the bulk goods. When the floor elements 4, 4' and the second wall elements 5 are moved to the position shown in Fig. 1, the parts that were liable to becoming soiled will not be exposed. This makes it possible to transport, for example, finished products with that same trailer 1. Simply sweeping the interior of the trailer 1 in the position shown in Fig. 2 will suffice for the transport of food products and the like.

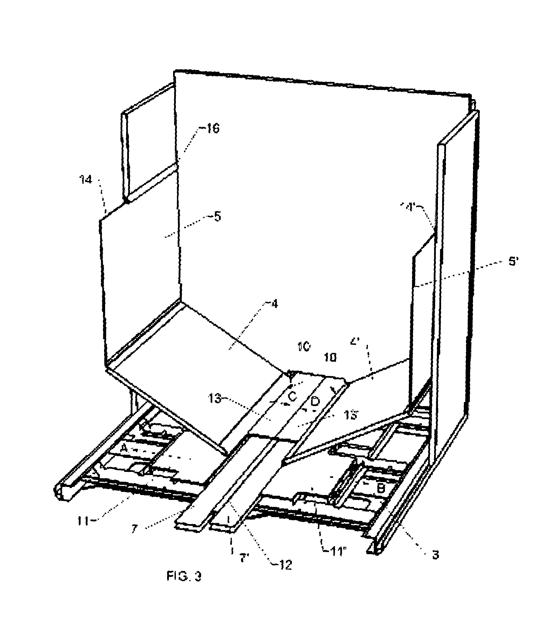

Fig. 3 shows a further embodiment of the invention, wherein the conveyor means consists of two parts 7, 7'. The two parts are separated by a central reservation 12, comprised of an elevation that is higher than the surface of the conveyor means 7, 7'. Although this is not shown, the conveyor means may also be integrally formed with the elevation 12. In that case the elevation must be supported at the underside.

The conveyor means may be covered by cover means 11, 11' (shown in a configuration with the transport means being exposed); 13, 13' (shown in a configuration with the transport means being covered by the cover means 13, 13'). The cover means 11, 11' are located in a rear part of the trailer 1, the cover means 13, 13' are located in a front part of the trailer 1. In order to expose the conveyor means 7, 7', the cover means are movable from a covering position in the direction of the arrows A, B.

The floor elements 4, 4' can be moved in the direction of the arrows C, D whereby the ends 10, 10' lie substantially above the elevation 12, on which they are supported by the interposed cover means 13, 13'. The side wall elements will then automatically be moved downward and be folded over to assume the position shown in part in Fig. 2.

When the cover means are covering the conveyor means, the ends of the cover means closest to each other will rest on the elevation 12. This prevents a downward movement of the conveyor means and provides firm support.

Not all the components necessary for the workable embodiment of the invention are shown in the figures. However, those skilled in the art will be quite capable of turning the invention described above and shown in the figures into a practical embodiment.

The bottom surface 3 as shown in the figures and described in the specification and claims may only be an imaginary bottom surface or it may be a physically present bottom surface. In that case a provision for receiving and implementing the conveyor means 7 needs to be provided. This is generally known in the art.

The height of the side wall elements 5, 5' may be such that when horizontally placed, the ends 14, 14' are in an abutting position. When the side wall elements 5, 5' are placed vertically, the ends 14, 14' may rest substantially against the topside of the walls 2, 2'; this depends on the height or width of the trailer. If desired, the ends 14, 14' of the side wall elements 5, 5' may be pushed against cover fillets 16 covering the space between the side walls 2 and side wall elements 5, 5'. This prevents dirt coming between the side walls 2 and side wall elements 5.

In the above description, "bottom surface" is also referred to as "first floor". These terms are used interchangeably and have both the same, non-limiting meaning.

A person skilled in the art is quite capable of further changing or modifying the invention described above and illustrated in the figures, without departing from the protective scope of the claims. For example, it may be necessary to provide a refrigerator installation for cooling the trailer and the products therein to a desirable temperature. This is in particular suitable with regard to long-haul transport. The trailer in the form of floor unloader for the transport of, for instance, potatoes may then also be cooled to a temperature at which the bulk goods can tolerate long storage. This is ideal, especially for long-haul potato transport, such as transcontinental transport.

## Claims

1. A trailer (1), comprising at least a bottom surface (3) and side walls (2, 2'), **characterized in that** the same further comprises floor elements (4, 4') which:
- in a first position, are placed parallel with respect to the bottom surface and cover the bottom surface (3) substantially completely, and
- in a second position, are placed at an angle with respect to the bottom surface and cover the bottom surface (3) only partly.

2. A trailer (1) according to claim 1, **characterized in that** the two floor elements (4, 4') are placed mirror-symmetrically with respect to the longitudinal axis of the trailer (1).

3. A trailer (1) according to claim 1 or 2, **characterized in that** the same further comprises two side wall elements (5), wherein: in a first position the bottom surface (3) is covered by the floor elements (4, 4') and the second side wall elements (5); and in a second position, the bottom surface (3) is partly covered by the floor elements (4, 4') and the side walls (2, 2') are at least partly covered by the respective second side wall elements (5).

4. A trailer (1) according to claim 3, **characterized in that** in the second position the side walls (2, 2') are substantially completely covered by the respective second side wall elements (5).

5. A trailer (1) according to one or several of the preceding claims, **characterized in that** it is a floor unloader, wherein in the second position a part of the bottom surface (3) that is not covered by the floor elements (4, 4'), comprises a conveyor means (7).

6. A trailer (1) according to one or several of the preceding claims 3-5, **characterized in that** the same also comprises a roof, wherein in the second position the second side wall elements (5) reach substantially to the roof.

7. A trailer (1) according to one or several of the claims 3-6, **characterized in that** a first longitudinal side (8, 8') of each of the second side wall elements (5) is hingingly connected with a first longitudinal side (9, 9') of each of the respective floor elements (4, 4').

8. A trailer (1) according to one or several of the claims 3-7, **characterized in that** in the first position a second longitudinal side (6) of one of the second side wall elements (5) substantially rests against a second longitudinal side of the other of the second side wall elements.

9. A trailer (1) according to one or several of the preceding claims, **characterized in that** the first side walls (2, 2') are thermally insulating side walls (2, 2').

10. A trailer (1) according to one or several of the preceding claims, **characterized in that** in the second position, a longitudinal side (9, 9') of the floor elements (4, 4') placed along the side wall (2, 2') is positioned at a distance above the bottom surface (3) and the longitudinal side (10, 10') facing away therefrom is situated substantially at the level of the bottom surface (3).

11. A trailer (1) according to one or several of the claims 3-10, **characterized in that** in the first position the second side wall elements (5) rest on the floor elements (4, 4') and in the second position the second side wall elements (5) rest against the first wall elements (2, 2').

12. A trailer (1) according to one or several of the preceding claims, **characterized in that** the same comprises cover means (11, 11'), which in a first position are positioned at least partly above the conveyor means (7, 7'), and in a second position the conveyor means (7, 7') is at least to a large extent exposed.

13. A trailer (1) according to claim 10, **characterized in that** the cover means (11, 11') are slidable between the first and the second position.

14. A trailer (1) according to one or several of the preceding claims, **characterized in that** in the longitudinal direction of the conveyor means (7, 7'), the trailer (1) comprises an elevated part (12) for the support of the cover means (11, 11') covering the conveyor means (7, 7').

15. A trailer (1) according to one or several of the preceding claims, **characterized in that** the conveyor means (7, 7') comprises in the longitudinal direction an elevated part (12) for the support of cover means (11, 11') covering the conveyor means (7, 7').

16. A method for unloading a trailer according to one of the claims 12-15, **characterized in that** the trailer (1) comprises in the longitudinal direction at least two cover means (11, 11'; 13, 13'), which respectively cover a rear part and an adjoining relative forward part of the conveyor means (7, 7') wherein in a first step the rear cover means (11, 11') is moved from the first position to the second position, and the conveyor means (7, 7') is started in order to remove products from the rear part of the trailer (1), and in a second step, when at least a part of the products at the rear part have been removed from the trailer (1), the forward cover part (13, 13') is moved to the second position for the removal of products in the front part of the trailer (1).

17. A lorry, **characterized in that** the same comprises a trailer (1) according to one of the claims 1 to 16.
